# EUROPEAN PATENT SPECIFICATION

(11) **EP 3 312 727 B1**
(45) Date of publication and mention of the grant of the patent: **14.11.2018**
(21) Application number: 16865274.1
(22) Date of filing: 02.03.2016
(51) Int. Cl.: G06F 11/14, G06F 11/20

(54) **DIFFERENTIAL DATA BACKUP METHOD AND DEVICE**
DIFFERENZDATENSICHERUNGSVERFAHREN UND -VORRICHTUNG
PROCÉDÉ ET DISPOSITIF DE SAUVEGARDE DE DONNÉES DIFFÉRENTIELLES

(43) Date of publication of application: 25.04.2018
(73) Proprietor: HUAWEI TECHNOLOGIES CO., LTD., Guangdong 518129 (CN)
(72) Inventor: LIANG, Feng, Shenzhen Guangdong 518129 (CN); WANG, Xuesong, Shenzhen Guangdong 518129 (CN); YOU, Jun, Shenzhen Guangdong 518129 (CN); OUYANG, Ji, Shenzhen Guangdong 518129 (CN); TU, Weixin, Shenzhen Guangdong 518129 (CN)
(74) Representative: Thun, Clemens
(86) International application number: PCT/CN2016/075269
(87) International publication number: WO 2017/147794

(56) References cited:
- CN-A- 101 064 730
- CN-A- 103 902 407
- CN-A- 104 166 606
- CN-A- 104 166 606
- CN-A- 104 375 905
- CN-A- 105 243 109
- US-A1- 2010 250 858
- US-B1- 8 745 003
- US-B1- 8 745 003

## Description

### TECHNICAL FIELD

Embodiments of the present invention relate to the field of storage technologies, and more specifically, to a method and a device for differential data backup.

### BACKGROUND

In a remote replication technology, before a source storage device sends data to a backup storage device, the source storage device needs to shard the data into multiple data blocks, perform calculation to obtain fingerprints of all data blocks, and send the fingerprints to the backup storage device; the backup storage device compares the received fingerprints with a fingerprint that has been stored by the backup storage device, to determine a fingerprint in the received fingerprints that is not stored in the backup storage device, and feeds back a comparison result to the source storage device; and the source storage device filters the data according to the comparison result fed back by the backup storage device, to determine incremental data. Because the source storage device needs to send the fingerprints of all the data blocks to the backup storage device, plenty of computing resources and network bandwidth need to be consumed.

CN 104 166 606 A is related to a file backup method and a primary storage device.

In the method, the primary storage device divides the storage space of the primary file into N sub-data blocks, and at each backup moment of incremental backup, the data in the updated sub-data block between the backup time and the current backup time is copied to the local backup buffer. The primary storage device only needs to synchronize the data in the updated sub-data block stored in the local backup buffer.

### SUMMARY

The present invention provides a method according to claim 1 and a device according to claim 4 for differential data backup. A source storage device can determine, according to a correspondence between an identifier of a backup period and a fingerprint information set, a fingerprint information set corresponding to a current backup period, and determine, according to the determined fingerprint information set, a data block that needs to be backed up. Therefore, data backup efficiency can be improved, and consumption of computing resources and network resources can be reduced.

According to a first aspect, a method for differential data backup is provided, where the method is applied to a storage system, the storage system includes a source storage device and a backup storage device, the method is executed by the source storage device, and the method includes: determining, according to an identifier of a current backup period and a correspondence between an identifier of a backup period and a fingerprint information set, a fingerprint information set corresponding to the current backup period, where the fingerprint information set includes fingerprint information of a target data block stored by the source storage device between a start moment of the current backup period and an end moment of a previous backup period, and the target data block is different from all data blocks stored by the source storage device before the end moment of the previous backup period; sending fingerprints of the target data blocks, corresponding to the fingerprint information of the target data blocks, to the backup storage device; receiving a feedback message sent by the backup storage device, wherein the feedback message is used to indicate a differential fingerprint, and the differential fingerprint is a subset of the fingerprints of the target data blocks and different from a fingerprint of a data block stored in the backup storage device; and sending a target data block corresponding to the differential fingerprint to the backup storage device.

In this way, according to the method for differential data backup in an embodiment of the present invention, the source storage device can determine, only according to the identifier of the current backup period and the correspondence between an identifier of a backup period and a fingerprint information set, a data block that needs to be backed up in the current backup period, and send, to the backup storage device, the data block that needs to be backed up. Therefore, data backup efficiency can be improved, and consumption of computing resources and network resources can be reduced.

In this way, the backup storage device can directly store the received fingerprint, without performing fingerprint calculation, so that computing resources of the backup storage device can be reduced.

With reference to the first aspect, in a first possible implementation manner of the first aspect, the fingerprint information of the target data block is stored in a linked list, a head node of the linked list stores the identifier of the current backup period, the ith element node of the linked list stores fingerprint information of a ith target data block of the target data blocks, k is a total quantity of the target data blocks and is an integer greater than or equal to 1, and i is an integer greater than 0 and less than or equal to k.

The source storage device stores the fingerprint information of the target data block in a linked list manner, can record the fingerprint information of the target data block in a deduplication process, and can directly obtain, from the fingerprint information stored in the linked list, the fingerprint information set corresponding to the current backup period when needed. Therefore, computing resources and computing time can be reduced.

With reference to the first possible implementation manner of the first aspect, in a second possible implementation manner of the first aspect, the fingerprint information of the ith target data block is a fingerprint of the ith target data block, and the ith element node of the linked list further stores a mapping relationship between the fingerprint of the ith target data block and a storage address of the ith target data block; and
the obtaining the target data block according to the fingerprint information of the target data block includes: obtaining the ith target data block according to the fingerprint of the ith target data block and the mapping relationship between the fingerprint of the ith target data block and the storage address of the ith target data block.

Compared with the prior art, the source storage device according to an embodiment of the present invention only needs to send the fingerprint of the target data block stored between the start moment of the current backup period and the end moment of the previous backup period to the backup storage device for fingerprint comparison, with no need to send fingerprints of all data blocks included in data received by the source storage device between the start moment of the current backup period and the end moment of the previous backup period to the backup storage device for fingerprint comparison, and determines, according to a comparison result, a data block that needs to be backed up in the current backup period. The target data block is different from all the data blocks stored by the source storage device before the end moment of the previous backup period. Therefore, a quantity of the fingerprints sent to the backup storage device can be reduced, thereby reducing consumption of network resources and time consumed by the backup storage device for fingerprint comparison.

According to a second aspect, a storage device is provided, where the storage device is applied to a storage system, the storage system includes the storage device and a backup storage device, and the storage device comprises a processing unit, configured to determine, according to an identifier of a current backup period and a correspondence between an identifier of a backup period and a fingerprint information set, a fingerprint information set corresponding to the current backup period, wherein the fingerprint information set comprises fingerprint information of one or more target data blocks stored by the storage device between a start moment of the current backup period and an end moment of a previous backup period, and the target data blocks are different from all data blocks stored by the storage device before the end moment of the previous backup period; and a sending unit, configured to send fingerprints of the target data blocks, corresponding to the fingerprint information of the target data blocks, to the backup storage device; receive a feedback message sent by the backup storage device, wherein the feedback message is used to indicate a differential fingerprint, and the differential fingerprint is a subset of the fingerprints of the target data blocks and different from a fingerprint of a data block stored in the backup storage device; and send a target data block corresponding to the differential fingerprint to the backup storage device.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show only some embodiments of the present invention, and a person of ordinary skill in the art may still derive other drawings from these accompanying drawings without creative efforts.
FIG. 1 is a diagram of an application scenario according to an embodiment of the present invention;
FIG. 2 is a schematic block diagram of a controller of a source storage device according to an embodiment of the present invention;
FIG. 3 is a schematic flowchart of a method for differential data backup according to an embodiment of the present invention;
FIG. 4 is a schematic block diagram of a structure of a linked list according to an embodiment of the present invention;
FIG. 5 is a schematic flowchart of a method for differential data backup according to another embodiment of the present invention;
FIG. 6 is a schematic block diagram of a storage device according to an embodiment of the present invention; and
FIG. 7 is a schematic block diagram of a storage device according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention.

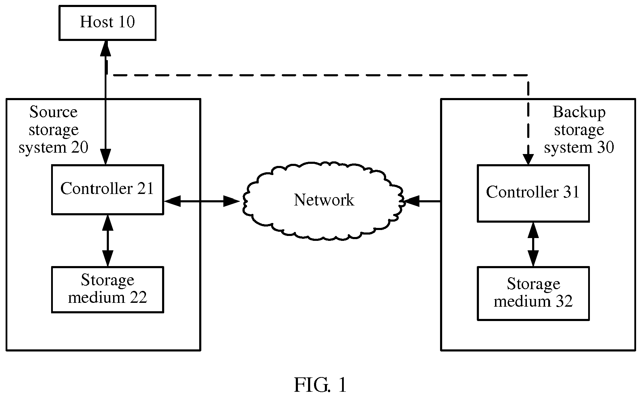

FIG. 1 is a diagram of an application scenario according to an embodiment of the present invention. As shown in FIG. 1, a host 10, a source storage system 20, and a backup storage system 30 are included. The host 10 is connected to both the source storage system 20 and the backup storage system 30. However, the host 10 is connected to only the source storage system 20 in normal cases, and is connected to the backup storage system 30 only when the backup storage system 30 is required to provide a service when the source storage system 20 is faulty. The source storage system 20 is connected to the backup storage system 30 by using a network, allowing bidirectional data transmission.

The source storage system 20 may be a storage device, and may be referred to as "a source storage device". As shown in FIG. 1, the source storage device 20 includes a controller 21 and a storage medium 22. The backup storage system 30 may be a storage device, and may be referred to as "a backup storage device". As shown in FIG. 1, the backup storage device 30 includes a controller 31 and a storage medium 32.

The following specifically describes a structure and a function of the source storage device 20.

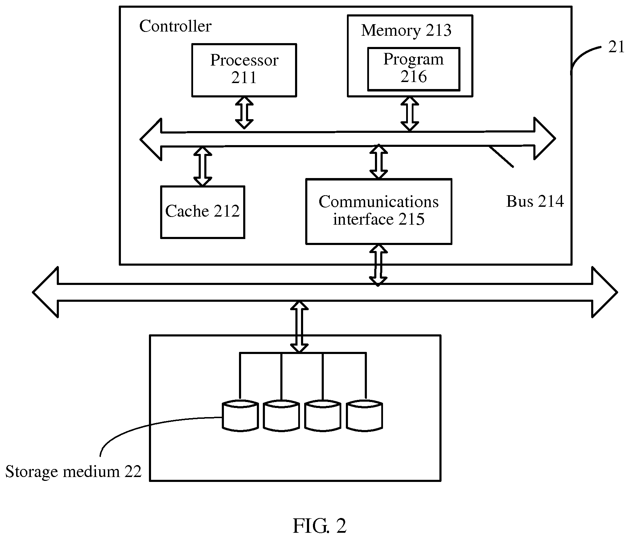

For example, as shown in FIG. 2, the controller 21 of the source storage device 20 mainly includes a processor (processor) 211, a cache (cache) 212, a memory (memory) 213, a communications bus (bus for short) 214, and a communications interface (Communications Interface) 215. The processor 211, the cache 212, the memory 213, and the communications interface 215 communicate with each other by using the bus 214.

The processor 211 may be a central processing unit (central processing unit, CPU) or an application-specific integrated circuit (application-specific integrated circuit, ASIC f), or may be configured as one or more integrated circuits for implementing this embodiment of the present invention. The processor 211 is configured to receive a data object (the data object refers to an object including actual data, and may be block data, or may be data in a file form or in another form) from the host 10, perform specific processing on the data object, and send a processed data object to the storage medium 22.

The communications interface 215 is configured to communicate with the host 10, the backup storage device 30, or the storage medium 22.

The memory 213 is configured to store a program 216. The memory 213 may include a high-speed RAM memory, and may further include a non-volatile memory (non-volatile memory), for example, at least one magnetic disk memory. It can be understood that the memory 213 may be any non-transitory (non-transitory) machine-readable medium that can store program code, such as a random-access memory (Random-Access Memory, "RAM" for short), a magnetic disk, a hard disk, an optical disc, a solid state disk (Solid State Disk, "SSD" for short), or a non-volatile memory.

The cache 212 is configured to temporarily store the data object received from the host 10 or a data object read from the storage medium 22. In addition, because a cache reads and writes data at a relatively high speed, for ease of reading, some frequently used information, for example, a logical address and write time of a data block, may be stored in the cache. The cache 212 may be any non-transitory (non-transitory) machine-readable medium that can store data, such as a RAM, a storage-class memory (Storage-Class Memory, "SCM" for short), a non-volatile memory (Non-Volatile Memory, "NVM" for short), a flash memory (Flash Memory), or a solid state disk (Solid State Disk, "SSD" for short).

The cache 212 and the memory 213 may be disposed together or separately, which is not limited in this embodiment of the present invention.

The program 216 may include program code, and the program code includes a computer operating instruction. For a storage device having a deduplication function, the program code may include a deduplication module. The deduplication module is configured to perform deduplication before the data object received from the host 10 is sent to the storage medium 22.

The following briefly describes the deduplication function by using the source storage device 20 as an example.

After receiving the data object sent by the host 10, the controller 21 may divide the data object into several data blocks of a same size. For each data block, the processor 211 determines whether the storage medium 22 stores a same data block; if the storage medium 22 does not store a same data block, the processor 211 writes the data block into the storage medium 22 and sets a reference count of the data block to an initial value (for example, 1); and if the storage medium 22 stores a same data block, the processor 211 does not need to write the stored data block into the storage medium 22 and increases a reference count of the data block by 1.

For how to determine whether the storage medium 22 stores a same data block, in a common practice, fingerprints of all data blocks stored in the storage medium 22 are pre-stored, and a fingerprint of each data block is obtained by calculating the data block according to a preset hash function. Then, a to-be-stored data block is calculated according to the hash function to obtain a fingerprint of the to-be-stored data block; and matching the fingerprint with the pre-stored fingerprints of all the data blocks is performed. If there is a same fingerprint, it indicates that the storage medium 22 has stored a same data block; otherwise, it indicates that the storage medium 22 does not store the to-be-stored data block. The fingerprints of all the data blocks may be stored in the cache 212, or may be stored in the storage medium 22. In addition, other manners may be used to determine whether the storage medium 22 stores a same data block, and are not enumerated herein.

It should be noted that, in this embodiment of the present invention, because the source storage device 20 has the deduplication function, fingerprint information of all data blocks in the source storage device 20 is stored in the cache 212 or the storage medium 22, and is referred to as a fingerprint information set (it can be understood that fingerprints, included in the fingerprint information set, of the data blocks are different) in this embodiment. In addition, the processor 211 may separately store a fingerprint information set corresponding to each backup period. Fingerprint information of a data block may be optionally a fingerprint of the data block, or may be an index (for example, a pointer that points to a fingerprint of a data block) of the fingerprint of the data block. Therefore, when needing to back up differential data, the processor 211 may directly determine, according to the separately stored fingerprint information set corresponding to each backup period, a data block that needs to be backed up in each backup period, and send, to the backup storage device 30 for backup storage, the data block that needs to be backed up.

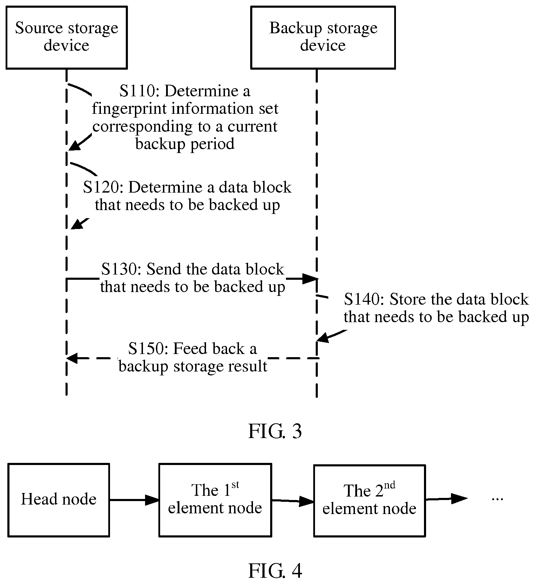

FIG. 3 is a schematic flowchart of a method for differential data backup according to an embodiment of the present invention. The method is applied to the source storage device 20 and the backup storage device 30 that are shown in FIG. 1. As shown in FIG. 3, the method 100 includes the following steps.

S110: The source storage device 20 determines a fingerprint information set corresponding to a current backup period.

In this embodiment, the source storage device 20 may periodically back up differential data into the backup storage device 30, and each period is referred to as a backup period in this embodiment. Specifically, the source storage device 20 may send differential data received in each backup period to the backup storage device 30. In this embodiment, because the differential data needs to be divided into several data blocks to determine whether there is a data block the same as a stored data block, the differential data may also be referred to as a differential data block. In addition, in this embodiment, because the source storage device 20 has a deduplication function, fingerprint information of all data blocks in the source storage device 20 is stored, and is referred to as a fingerprint information set (it can be understood that fingerprints, included in the fingerprint information set, of the data blocks are different) in this embodiment. In addition to the fingerprint information set of all the data blocks, the source storage device 20 may separately store a fingerprint information set corresponding to the current backup period. Optionally, the fingerprint information set and the fingerprint information set corresponding to the current backup period may be stored in a storage medium 22, or may be stored in a cache 212.

The fingerprint information set corresponding to the current backup period includes fingerprint information of a target data block stored by the source storage device 20 between a start moment of the current backup period and an end moment of a previous backup period, and the target data block is different from all data blocks stored by the source storage device 20 before the end moment of the previous backup period. That is, the target data block is a data block that the source storage device 20 needs to back up into the backup storage device 30 in the current backup period.

Specifically, step S110 is performed by a processor 211 of the source storage device 20. When performing a deduplication operation on written data, the processor 211 records fingerprint information of a target data block stored in a deduplication process.

For example, the processor 211 may store fingerprint information of a data block in a linked list, that is, the processor 211 stores fingerprint information of a data block in a linked list manner. Specifically, the linked list may store fingerprint information of all data blocks, an identifier of a backup period, and a fingerprint information set, and there is a correspondence between the identifier of the backup period and the fingerprint information set (an implementation manner of the correspondence may be determined by an implementation manner of the linked list). Therefore, step S110 may be specifically that: The processor 211 directly obtains, from the linked list according to an identifier of the current backup period and the correspondence between the identifier of the backup period and the fingerprint information set, the fingerprint information set corresponding to the current backup period.

For example, a structure of the linked list is shown in FIG. 4. A head node of the linked list stores the identifier of the backup period, the ith element node of the linked list stores fingerprint information of the ith target data block of target data blocks, k is a total quantity of the target data blocks and is an integer greater than or equal to 1, and i is an integer greater than 0 and less than or equal to k.

Optionally, the linked list may be stored in the storage medium 22, or may be stored in the cache 212, and the identifier of the backup period may include a start time and/or an end time of the backup period.

It should be understood that there may further be another manner of storing fingerprint information of a data block. For example, the fingerprint information of the data block may be stored in a stack or queue manner. This embodiment does not need to limit the manner of storing the fingerprint information of the data block.

S120: The source storage device 20 obtains, according to the fingerprint information set corresponding to the current backup period, a data block that needs to be backed up in the current backup period.

Optionally, fingerprint information may be an index of a fingerprint of a target data block, for example, may be a pointer that points to the fingerprint. In this case, after determining the fingerprint information set corresponding to the current backup period, the processor 211 may determine, according to a value of the pointer of the fingerprint information set, a fingerprint corresponding to the current backup period, and then obtain a target data block according to the fingerprint and a mapping relationship, stored in the storage medium 22 or the cache 212, between the fingerprint and a storage address of a data block, where the target data block is the data block that needs to be backed up in the current backup period.

Optionally, fingerprint information may be a fingerprint of a target data block. In this case, after determining the fingerprint information set corresponding to the current backup period, the processor 211 may directly obtain the target data block according to a fingerprint included in the fingerprint information set and a mapping relationship, stored in the storage medium 22 or the cache 212, between the fingerprint and a storage address of the corresponding data block.

Further, the ith element node of the linked list shown in FIG. 4 further stores a mapping relationship between a fingerprint of the ith target data block and a storage address of the ith target data block. Therefore, the processor 211 may directly obtain a target data block according to a fingerprint stored in the linked list and a mapping relationship between the fingerprint and a storage address of the target data block.

Specifically, step S120 may be performed by the processor 211 of the source storage device 20. S130: The source storage device 20 sends, to the backup storage device 30, the data block that needs to be backed up.

Specifically, the processor 211 sends, to the backup storage device 30 through a communications interface 215, the data block that needs to be backed up.

S140: The backup storage device 30 stores the data block that needs to be backed up.

In this embodiment of the present invention, in step S140, when receiving the data block that needs to be backed up, the backup storage device 30 may perform calculation, by using a same fingerprint calculation method as that of the source storage device, to obtain a fingerprint of the received data block that needs to be backed up, and store the fingerprint obtained by calculation to a storage medium 32 of the backup storage device 30.

Optionally, in step S130, the source storage device 20 may further send, to the backup storage device 30, the fingerprint of the data block that needs to be backed up. Correspondingly, in step S140, the backup storage device 30 directly stores the received fingerprint to the storage medium 32. Therefore, computing resources of the backup storage device 30 can be reduced.

Optionally, as shown in FIG. 3, the method 100 may further include:
S150: The backup storage device 30 feeds back a backup storage result to the source storage device 20.

The backup storage result indicates that the backup storage device 30 has successfully stored the data block that needs to be backed up.

The method 100 shown in FIG. 3 is mainly applicable to a scenario in which the source storage device 20 and the backup storage device 30 use a same deduplication algorithm, deduplication range, and data block size. On the basis of the method shown in FIG. 3, the source storage device 20 can determine a data block that needs to be backed up in a backup period, with no engagement of the backup storage device 30. Therefore, data backup efficiency can be improved.

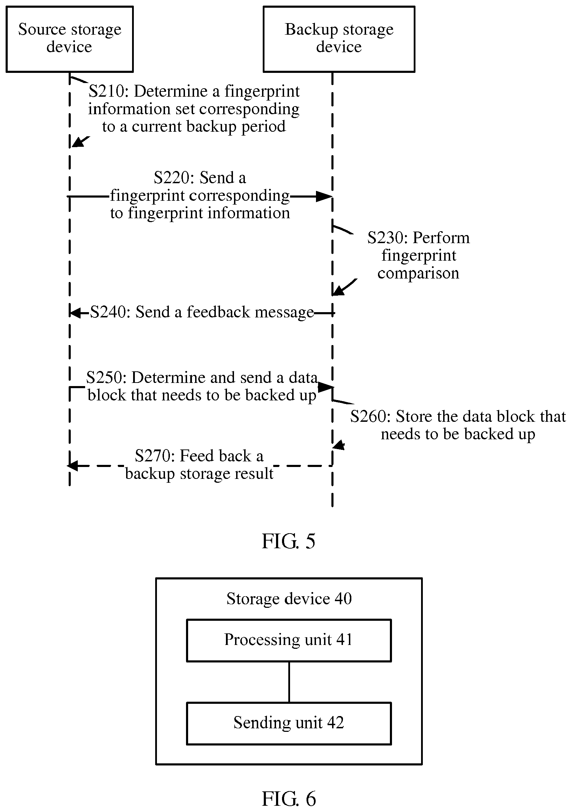

In some scenarios, a deduplication range of the source storage device 20 and a deduplication range of the backup storage device 30 are different. For example, the source storage device 20 uses a local deduplication mechanism, and the backup storage device 30 uses a global deduplication mechanism. A deduplication range defined by the local deduplication mechanism is a single storage unit (for example, a single logical unit number (Logical Unit Number, LUN), or a single resource pool (POOL)), while a deduplication range defined by the global deduplication mechanism is storage space of an entire system. When the backup storage device 30 uses the global deduplication mechanism, it can be understood that, in addition to backing up data blocks in the source storage device 20, the backup storage device 30 is configured to back up data blocks in another source storage device. As a result, the data block that needs to be backed up and that is determined by the source storage device 20 may have been stored in the backup storage device 30. Therefore, before the source storage device 20 actually sends the data block, a step of sending, to the backup storage device 30 for comparison, the fingerprint of the data block that needs to be backed up and that is determined by the source storage device 20 may be added. Specifically, as shown in FIG. 5, a method 200 in FIG. 5 includes the following steps.

S210: A source storage device 20 obtains a fingerprint information set corresponding to a current backup period.

This step is the same as step S110. To avoid repetition, details are not described herein again.

S220: The source storage device 20 sends a fingerprint corresponding to the fingerprint information set to a backup storage device 30.

In step S220, a processor 211 of the source storage device 20 only needs to send, to the backup storage device for fingerprint comparison, a fingerprint of the determined data block (a target data block stored by the source storage device 20 between a start moment of the current backup period and an end moment of a previous backup period, where the target data block is different from all data blocks stored by the source storage device 20 before the end moment of the previous backup period) that needs to be backed up in the current backup period. However, in the prior art, the source storage device needs to send, to the backup storage device 30 for fingerprint comparison, fingerprints of all data blocks included in data received by the source storage device 20 between the start moment of the current backup period and the end moment of the previous backup period. Therefore, according to the method for differential data backup provided in this embodiment of the present invention, a quantity of fingerprints sent by the source storage device to the backup storage device can be reduced, thereby reducing consumption of network bandwidth and time consumed by the backup storage device for fingerprint comparison.

S230: The backup storage device 30 compares the received fingerprint with a fingerprint that has been stored by the backup storage device 30.

A difference between this embodiment and the embodiment shown in FIG. 3 lies in that: In this embodiment, the backup storage device 30 receives a fingerprint sent by the source storage device 20 and compares the fingerprint with a fingerprint that has been stored by the backup storage device 30. This is not required in the embodiment shown in FIG. 3. A reason lies in that: The method according to the embodiment shown in FIG. 3 is mainly applied to a scenario in which the source storage device 20 and the backup storage device 30 use a same deduplication range, while the method according to this embodiment is mainly applied to a scenario in which the source storage device 20 uses a local deduplication mechanism, and the backup storage device 30 uses a global deduplication mechanism. As described above, in the latter scenario, the data block that needs to be backed up and that is determined by the source storage device 20 may have been stored in the backup storage device 30. To prevent the source storage device 20 from sending an unnecessary data block to the backup storage device 30, before the source storage device 20 sends a data block to the backup storage device 30, the source storage device 20 sends, to the backup storage device 30 for comparison, the fingerprint of the data block that needs to be backed up and that is determined by the source storage device 20.

S240: The source storage device 20 receives a feedback message sent by the backup storage device 30.

The feedback message indicates a fingerprint comparison result in step S230. Specifically, the feedback message is used to indicate a differential fingerprint. The differential fingerprint herein refers to a fingerprint in fingerprints received by the backup storage device 30 in step S220 that is not stored in the backup storage device 30. That is, the differential fingerprint is actually a fingerprint of the fingerprints received by the backup storage device 30 in step S220, and the fingerprint is different from fingerprints of data blocks stored in the backup storage device 30. Optionally, the feedback message may indicate the differential fingerprint in an indirect manner. Specifically, the feedback message carries the fingerprint that already exists in the backup storage device 30 and that is in the fingerprints sent by the source storage device 20, and the source storage device 20 can obtain the differential fingerprint by comparing the fingerprint carried in the feedback message with the fingerprints previously sent to the backup storage device 30. The feedback message may alternatively indicate the differential fingerprint in a direct manner. Specifically, the feedback message carries the fingerprint in the fingerprints sent by the source storage device 20 that is not stored in the backup storage device 30, and the source storage device 20 directly determines the fingerprint carried in the feedback message as the differential fingerprint.

S250: The source storage device 20 re-determines, according to the feedback message, the data block that needs to be backed up in the current backup period, and sends, to the backup storage device 30, the re-determined data block that needs to be backed up.

Specifically, the processor 211 of the source storage device 20 determines, according to the fingerprint carried in the feedback message, a fingerprint (that is, the differential fingerprint) in the fingerprints sent to the backup storage device 30 in step S220 that is not stored in the backup storage device 30; obtains, according to a mapping relationship between the fingerprint and a storage address of the data block, a data block corresponding to the differential fingerprint; and sends the data blocks to the backup storage device 30 through a communications interface 215. S260: The backup storage device 30 receives the re-determined data block that needs to be backed up and that is sent by the source storage device 20, and stores the data block that needs to be backed up.

Optionally, as shown in FIG. 4, the method 200 may further include:
S270: The backup storage device 30 feeds back a backup storage result to the source storage device 20.

The backup storage result indicates that the backup storage device 30 has successfully stored the data block that needs to be backed up.

The foregoing describes in detail the method for differential data backup according to the foregoing embodiments of the present invention with reference to FIG. 3 to FIG. 5. The following describes a storage device according to an embodiment of the present invention with reference to FIG. 6. The storage device is applied to a storage system, and the storage system includes the storage device and a backup storage device. As shown in FIG. 6, a storage device 40 includes a processing unit 41 and a sending unit 42.

The processing unit 41 is configured to determine, according to an identifier of a current backup period and a correspondence between an identifier of a backup period and a fingerprint information set, a fingerprint information set corresponding to the current backup period. The fingerprint information set includes fingerprint information of a target data block stored by the storage device between a start moment of the current backup period and an end moment of a previous backup period, and the target data block is different from all data blocks stored by the source storage device 40 before the end moment of the previous backup period.

The processing unit 41 is further configured to obtain the target data block according to the fingerprint information of the target data block.

The sending unit 42 is configured to send the target data block to the backup storage device.

In this way, the storage device according to this embodiment of the present invention can determine, only according to the identifier of the current backup period and the correspondence between an identifier of a backup period and a fingerprint information set, a data block that needs to be backed up in the current backup period, and send, to a backup storage device, the data block that needs to be backed up. Therefore, data backup efficiency can be improved, and consumption of computing resources and network resources can be reduced.

In this embodiment of the present invention, optionally, the sending unit 42 is further configured to send a fingerprint of the target data block to the backup storage device.

In this embodiment of the present invention, optionally, the fingerprint information of the target data block is stored in a linked list. A head node of the linked list stores the identifier of the current backup period, the ith element node of the linked list stores fingerprint information of the ith target data block of target data blocks, k is a total quantity of the target data blocks, and i is an integer greater than 0 and less than or equal to k.

In this embodiment of the present invention, optionally, the fingerprint information of the ith target data block is a fingerprint of the ith target data block, and the ith element node of the linked list further stores a mapping relationship between the fingerprint of the ith target data block and a storage address of the ith target data block.

The processing unit 41 is specifically configured to obtain the ith target data block according to the fingerprint of the ith target data block and the mapping relationship between the fingerprint of the ith target data block and the storage address of the ith target data block.

It should be understood that the storage device 40 according to this embodiment of the present invention may correspond to the source storage device that executes the method 100 in the foregoing embodiment of the present invention, and the foregoing and other operations and/or functions of the units of the storage device 40 are separately intended to implement procedures, in the method in FIG. 3, corresponding to the source storage device. For brevity, details are not described herein again.

In this way, the storage device according to this embodiment of the present invention can determine, only according to the identifier of the current backup period and the correspondence between an identifier of a backup period and a fingerprint information set, a data block that needs to be backed up in the current backup period, and send, to a backup storage device, the data block that needs to be backed up. Therefore, data backup efficiency can be improved, and consumption of computing resources and network resources can be reduced.

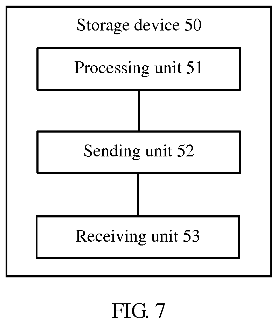

FIG. 7 shows a storage device according to another embodiment of the present invention. The storage device is applied to a storage system, and the storage system includes the storage device and a backup storage device. As shown in FIG. 7, a storage device 50 includes a processing unit 51, a sending unit 52, and a receiving unit 53.

The processing unit 51 is configured to determine, according to an identifier of a current backup period and a correspondence between an identifier of a backup period and a fingerprint information set, a fingerprint information set corresponding to the current backup period. The fingerprint information set includes fingerprint information of a target data block stored by the source storage device 50 between a start moment of the current backup period and an end moment of a previous backup period, and the target data block is different from all data blocks stored by the storage device before the end moment of the previous backup period.

The sending unit 52 is configured to send a fingerprint, corresponding to the fingerprint information of the target data block, of the target data block to the backup storage device.

The receiving unit 53 is configured to receive a feedback message sent by the backup storage device. The feedback message is used to indicate a differential fingerprint, and the differential fingerprint is a subset of the fingerprint of the target data block and different from a fingerprint of a data block stored in the backup storage device.

The sending unit 52 is further configured to send a target data block corresponding to the differential fingerprint to the backup storage device.

In this way, the source storage device 50 according to this embodiment of the present invention only needs to send the fingerprint of the target data block stored between the start moment of the current backup period and the end moment of the previous backup period to the backup storage device for fingerprint comparison, with no need to send fingerprints of all data blocks included in data received by the source storage device 50 between the start moment of the current backup period and the end moment of the previous backup period to the backup storage device for fingerprint comparison, and determines, according to a comparison result, a data block that needs to be backed up in the current backup period. The target data block is different from all the data blocks stored by the source storage device before the end moment of the previous backup period. Therefore, a quantity of the fingerprints sent to the backup storage device can be reduced, thereby reducing consumption of network resources and time consumed by the backup storage device for fingerprint comparison.

In this embodiment of the present invention, optionally, the storage device has a deduplication function, the backup storage device has a deduplication function, and a deduplication range of the storage device is less than a deduplication range of the backup storage device.

It should be understood that the storage device 50 according to this embodiment of the present invention may correspond to the source storage device that executes the method 200 in the foregoing embodiment of the present invention, and the foregoing and other operations and/or functions of the units of the storage device 50 are separately intended to implement procedures, in the method in FIG. 5, corresponding to the source storage device. For brevity, details are not described herein again.

In this way, the source storage device 50 according to this embodiment of the present invention only needs to send the fingerprint of the target data block stored between the start moment of the current backup period and the end moment of the previous backup period to the backup storage device for fingerprint comparison, with no need to send fingerprints of all data blocks included in data received by the source storage device 50 between the start moment of the current backup period and the end moment of the previous backup period to the backup storage device for fingerprint comparison, and determines, according to a comparison result, a data block that needs to be backed up in the current backup period. The target data block is different from all the data blocks stored by the source storage device 50 before the end moment of the previous backup period. Therefore, a quantity of the fingerprints sent to the backup storage device can be reduced, thereby reducing consumption of network resources and time consumed by the backup storage device for fingerprint comparison.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described.

In the several embodiments provided in this application, it should be understood that the disclosed system, apparatus, and method may be implemented in other manners. For example, the described apparatus embodiment is only an example. For example, the unit division is only logical function division and may be other division in actual implementation. For example, a plurality of units or components may be combined or integrated into another system, or some features may be ignored or not performed. In addition, the displayed or discussed mutual couplings or direct couplings or communication connections may be indirect couplings or communication connections between some interfaces, apparatuses, and units, or may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are only specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for differential data backup, wherein the method is applied to a storage system, the storage system comprises a source storage device (20) and a backup storage device (30), the method is executed by the source storage device (20), and the method comprises:
determining (S210), according to an identifier of a current backup period and a correspondence between an identifier of a backup period and a fingerprint information set, a fingerprint information set corresponding to the current backup period, wherein the fingerprint information set corresponding to the current backup period comprises fingerprint information of one or more target data blocks stored by the source storage device between a start moment of the current backup period and an end moment of a previous backup period, and the target data blocks are different from all data blocks stored by the source storage device before the end moment of the previous backup period;
**characterized in** the steps of:
sending (S220) fingerprints of the target data blocks, corresponding to the fingerprint information of the target data blocks, to the backup storage device;
receiving (S240) a feedback message sent by the backup storage device, wherein the feedback message is used to indicate a differential fingerprint, and the differential fingerprint is a subset of the fingerprints of the target data blocks and different from a fingerprint of a data block stored in the backup storage device; and
sending (S250) a target data block corresponding to the differential fingerprint to the backup storage device.

2. The method according to claim 1, wherein the fingerprint information of the target data blocks is stored in a linked list, a head node of the linked list stores the identifier of the current backup period, the i^{th} element node of the linked list stores fingerprint information of a i^{th} target data block of the target data blocks, k is a total quantity of the target data blocks and is an integer greater than or equal to 1, and i is an integer greater than 0 and less than or equal to k.

3. The method according to claim 2, wherein the fingerprint information of the i^{th} target data block is a fingerprint of the i^{th} target data block, and the i^{th} element node of the linked list further stores a mapping relationship between the fingerprint of the i^{th} target data block and a storage address of the i^{th} target data block; and
the obtaining the target data block according to the fingerprint information of the target data block comprises:
obtaining the i^{th} target data block according to the fingerprint of the i^{th} target data block and the mapping relationship between the fingerprint of the i^{th} target data block and the storage address of the i^{th} target data block.

4. A storage device (40), wherein the storage device is applied to a storage system, the storage system comprises the storage device and a backup storage device (30), and the storage device comprises:
a processing unit (41), configured to determine, according to an identifier of a current backup period and a correspondence between an identifier of a backup period and a fingerprint information set, a fingerprint information set corresponding to the current backup period, wherein the fingerprint information set comprises fingerprint information of one or more target data blocks stored by the storage device between a start moment of the current backup period and an end moment of a previous backup period, and the target data blocks are different from all data blocks stored by the storage device before the end moment of the previous backup period; and
**characterized in**
a sending unit (42), configured to send fingerprints of the target data blocks, corresponding to the fingerprint information of the target data blocks, to the backup storage device; receive a feedback message sent by the backup storage device, wherein the feedback message is used to indicate a differential fingerprint, and the differential fingerprint is a subset of the fingerprints of the target data blocks and different from a fingerprint of a data block stored in the backup storage device; and send a target data block corresponding to the differential fingerprint to the backup storage device.

5. The storage device according to claim 4, wherein the fingerprint information of the target data block is stored in a linked list, a head node of the linked list stores the identifier of the current backup period, the i^{th} element node of the linked list stores fingerprint information of a i^{th} target data block of the target data blocks, k is a total quantity of the target data blocks and is an integer greater than or equal to 1, and i is an integer greater than 0 and less than or equal to k.

6. The storage device according to claim 5, wherein the fingerprint information of the i^{th} target data block is a fingerprint of the i^{th} target data block, and the i^{th} element node of the linked list further stores a mapping relationship between the fingerprint of the i^{th} target data block and a storage address of the i^{th} target data block; and
the processing unit (41) is specifically configured to:
obtain the i^{th} target data block according to the fingerprint of the i^{th} target data block and the mapping relationship between the fingerprint of the i^{th} target data block and the storage address of the i^{th} target data block.

## Patentansprüche

1. Verfahren zur differenziellen Datensicherung, wobei das Verfahren auf ein Speichersystem angewendet wird, das Speichersystem eine Quellspeichervorrichtung (20) und ein Sicherungsspeichervorrichtung (30) umfasst, das Verfahren von der Quellspeichervorrichtung (20) ausgeführt wird und das Verfahren umfasst:
Bestimmen (S210), gemäß einer Kennung eines aktuellen Sicherungszeitraums und einer Übereinstimmung zwischen einer Kennung eines Sicherungszeitraums und einem Fingerabdruckinformationssatz, eines Fingerabdruckinformationssatzes, der dem aktuellen Sicherungszeitraum entspricht, wobei der dem aktuellen Sicherungszeitraum entsprechende Fingerabdruckinformationssatz die Fingerabdruckinformation von einem oder mehreren Zieldatenblöcken umfasst, die von der Quellspeichervorrichtung zwischen einem Startzeitpunkt des aktuellen Sicherungszeitraums und einem Endzeitpunkt eines vorherigen Sicherungszeitraums gespeichert werden, und die Zieldatenblöcke sich von allen Datenblöcken unterscheiden, die von der Quellspeichervorrichtung vor dem Endzeitpunkt des vorherigen Sicherungszeitraums gespeichert werden;
**gekennzeichnet durch** die folgenden Schritte:
Senden (S220) von Fingerabdrücken der Zieldatenblöcke, die der Fingerabdruckinformation der Zieldatenblöcke entsprechen, an die Sicherungsspeichervorrichtung;
Empfangen (S240) einer Rückmeldungsnachricht, die von der Sicherungsspeichervorrichtung gesendet wird, wobei die Rückmeldungsnachricht verwendet wird, um einen differenziellen Fingerabdruck anzugeben, und der differenzielle Fingerabdruck eine Teilmenge der Fingerabdrücke der Zieldatenblöcke ist und sich von einem Fingerabdruck eines Datenblocks unterscheidet, der in der Sicherungsspeichervorrichtung gespeichert ist; und
Senden (S250) eines Zieldatenblocks, der dem differenziellen Fingerabdruck entspricht, an die Sicherungsspeichervorrichtung.

2. Verfahren nach Anspruch 1, wobei die Fingerabdruckinformation der Zieldatenblöcke in einer verknüpften Liste gespeichert ist, ein Kopfknoten der verknüpften Liste die Kennung des aktuellen Sicherungszeitraums speichert, der i-te Elementknoten der verknüpften Liste die Fingerabdruckinformation eines i-ten Zieldatenblocks der Zieldatenblöcke speichert, k eine Gesamtmenge der Zieldatenblöcke ist und ist eine ganze Zahl größer als oder gleich 1 ist, und i eine ganze Zahl größer als 0 und kleiner als oder gleich k ist.

3. Verfahren nach Anspruch 2, wobei die Fingerabdruckinformation des i-ten Zieldatenblocks ein Fingerabdruck des i-ten Zieldatenblocks ist und der i-te Elementknoten der verknüpften Liste ferner eine Zuordnungsbeziehung zwischen dem Fingerabdruck des i-ten Zieldatenblocks und einer Speicheradresse des i-ten Zieldatenblocks speichert; und
das Erhalten des Zieldatenblocks gemäß der Fingerabdruckinformation des Zieldatenblocks umfasst:
Erhalten des i-ten Zieldatenblocks gemäß dem Fingerabdruck des i-ten Zieldatenblocks und der Zuordnungsbeziehung zwischen dem Fingerabdruck des i-ten Zieldatenblocks und der Speicheradresse des i-ten Zieldatenblocks.

4. Speichervorrichtung (40), wobei die Speichervorrichtung auf ein Speichersystem angewendet wird, das Speichersystem die Speichervorrichtung und eine Sicherungsspeichervorrichtung (30) umfasst und die Speichervorrichtung umfasst:
eine Verarbeitungseinheit (41), die konfiguriert ist, um, gemäß einer Kennung eines aktuellen Sicherungszeitraums und einer Übereinstimmung zwischen einer Kennung eines Sicherungszeitraums und einem Fingerabdruckinformationssatz, einen Fingerabdruckinformationssatz zu bestimmen, der dem aktuellen Sicherungszeitraum entspricht, wobei der Fingerabdruckinformationssatz die Fingerabdruckinformation von einem oder mehreren Zieldatenblöcken umfasst, die von der Speichervorrichtung zwischen einem Startzeitpunkt des aktuellen Sicherungszeitraums und einem Endzeitpunkt eines vorherigen Sicherungszeitraums gespeichert werden, und die Zieldatenblöcke sich von allen Datenblöcken unterscheiden, die von der Speichervorrichtung vor dem Endzeitpunkt des vorherigen Sicherungszeitraums gespeichert werden; und
**dadurch gekennzeichnet, dass**
eine Sendeeinheit (42) konfiguriert ist, um Fingerabdrücke der Zieldatenblöcke, die der Fingerabdruckinformation der Zieldatenblöcke entsprechen, an die Sicherungsspeichervorrichtung zu senden; eine Rückmeldungsnachricht zu empfangen, die von der Sicherungsspeichervorrichtung gesendet wird, wobei die Rückmeldungsnachricht verwendet wird, um einen differenziellen Fingerabdrucks anzugeben, und der differenzielle Fingerabdruck eine Teilmenge der Fingerabdrücke der Zieldatenblöcke ist und sich von einem Fingerabdruck eines Datenblocks unterscheidet, der in der Sicherungsspeichervorrichtung gespeichert ist; und einen Zieldatenblock, der dem differenziellen Fingerabdruck entspricht, an die Sicherungsspeichervorrichtung zu senden.

5. Speichervorrichtung nach Anspruch 4, wobei die Fingerabdruckinformation des Zieldatenblocks in einer verknüpften Liste gespeichert ist, ein Kopfknoten der verknüpften Liste die Kennung des aktuellen Sicherungszeitraums speichert, der i-te Elementknoten der verknüpften Liste die Fingerabdruckinformation eines i-ten Zieldatenblocks der Zieldatenblöcke speichert, k eine Gesamtmenge der Zieldatenblöcke ist und ist eine ganze Zahl größer als oder gleich 1 ist, und i eine ganze Zahl größer als 0 und kleiner als oder gleich k ist.

6. Speichervorrichtung nach Anspruch 5, wobei die Fingerabdruckinformation des i-ten Zieldatenblocks ein Fingerabdruck des i-ten Zieldatenblocks ist und der i-te Elementknoten der verknüpften Liste ferner eine Zuordnungsbeziehung zwischen dem Fingerabdruck des i-ten Zieldatenblocks und einer Speicheradresse des i-ten Zieldatenblocks speichert; und
die Verarbeitungseinheit (41) insbesondere konfiguriert ist, um:
den i-ten Zieldatenblock gemäß dem Fingerabdruck des i-ten Zieldatenblocks und der Zuordnungsbeziehung zwischen dem Fingerabdruck des i-ten Zieldatenblocks und der Speicheradresse des i-ten Zieldatenblocks zu erhalten.

## Revendications

1. Procédé de sauvegarde de données différentielles, dans lequel le procédé est appliqué à un système de stockage, le système de stockage comprend un dispositif de stockage source (20) et un dispositif de stockage de sauvegarde (30), le procédé est exécuté par le dispositif de stockage source (20) et le procédé consiste :
à déterminer (S210), en fonction d'un identifiant d'une période de sauvegarde actuelle et d'une correspondance entre un identifiant d'une période de sauvegarde et d'un ensemble d'informations d'empreinte digitale, un ensemble d'informations d'empreinte digitale correspondant à la période de sauvegarde actuelle, dans lequel l'ensemble d'informations d'empreinte digitale correspondant à la période de sauvegarde actuelle comporte des informations d'empreinte digitale d'un ou de plusieurs blocs de données cibles stockés par le dispositif de stockage source entre un moment de début de la période de sauvegarde actuelle et un moment de fin d'une précédente période de sauvegarde, et les bloc de données cibles sont différents de tous les blocs de données stockés par le dispositif de stockage source avant le moment de fin de la précédente période de sauvegarde ;
caractérisé dans les étapes consistant :
à envoyer (S220) des informations d'empreinte digitale des blocs de données cibles, correspondant aux informations d'empreinte digitale des blocs de données cibles, au dispositif de stockage de sauvegarde ;
à recevoir (S240) un message de rétroaction envoyé par le dispositif de stockage de sauvegarde, dans lequel le message de rétroaction est utilisé pour indiquer une empreinte digitale différentielle et l'empreinte digitale différentielle est un sous-ensemble d'empreintes digitales des blocs de données cibles et différente d'une empreinte digitale d'un bloc de données stockée dans le dispositif de stockage de sauvegarde ; et
à envoyer (S250) un bloc de données cible correspondant à l'empreinte digitale différentielle au dispositif de stockage de sauvegarde.

2. Procédé selon la revendication 1, dans lequel les informations d'empreinte digitale des blocs de données cibles sont stockées dans une liste liée, un noeud de tête de la liste liée stocke l'identifiant de la période de sauvegarde actuelle, le i^{ème} noeud d'élément de la liste liée stocke des informations d'empreinte digitale d'un i^{ème} bloc de données cible des blocs de données cibles, k est une quantité totale de blocs de données cibles et est un nombre entier supérieur ou égal à 1, et i est un nombre entier supérieur à 0 et inférieur ou égal à k.

3. Procédé selon la revendication 2, dans lequel les informations d'empreinte digitale du i^{eme} bloc de données cible est une empreinte digitale du i^{ème} bloc de données cible et le i^{ème} noeud d'élément de la liste liée stocke en outre une relation de mise en correspondance entre l'empreinte digitale du i^{ème} bloc de données cible et une adresse de stockage du i^{ème} bloc de données cible ; et
l'obtention du bloc de données cible en fonction des informations d'empreinte digitale du bloc de données cible consiste :
à obtenir le i^{ème} bloc de données cible en fonction de l'empreinte digitale du i^{ème} bloc de données cible et de la relation de mise en correspondance entre l'empreinte digitale du i^{ème} bloc de données cible et l'adresse de stockage du i^{ème} bloc de données cible.

4. Dispositif de stockage (40), dans lequel le dispositif de stockage est appliqué à un système de stockage, le système de stockage comprend le dispositif de stockage et un dispositif de stockage de sauvegarde (30), et le dispositif de stockage comprend :
une unité de traitement (41), configurée pour déterminer, en fonction d'un identifiant d'une période de sauvegarde actuelle et d'une correspondance entre un identifiant d'une période de sauvegarde et d'un ensemble d'informations d'empreinte digitale, un ensemble d'informations d'empreinte digitale correspondant à la période de sauvegarde actuelle, dans lequel l'ensemble d'informations d'empreinte digitale comporte des informations d'empreinte digitale d'un ou de plusieurs blocs de données cibles stockés par le dispositif de stockage entre un moment de début de la période de sauvegarde actuelle et un moment de fin d'une précédente période de sauvegarde, et les bloc de données cibles sont différents de tous les blocs de données stockés par le dispositif de stockage avant le moment de fin de la précédente période de sauvegarde ; et
**caractérisé en ce qu'**il comprend :
une unité d'envoi (42), configurée pour envoyer des informations d'empreinte digitale des blocs de données cibles, correspondant aux informations d'empreinte digitale des blocs de données cibles, au dispositif de stockage de sauvegarde ; pour recevoir un message de rétroaction envoyé par le dispositif de stockage de sauvegarde, dans lequel le message de rétroaction est utilisé pour indiquer une empreinte digitale différentielle et l'empreinte digitale différentielle est un sous-ensemble d'empreintes digitales des blocs de données cibles et différente d'une empreinte digitale d'un bloc de données stocké dans le dispositif de stockage de sauvegarde ; et pour envoyer un bloc de données cible correspondant à l'empreinte digitale différentielle au dispositif de stockage de sauvegarde.

5. Dispositif de stockage selon la revendication 4, dans lequel les informations d'empreinte digitale du bloc de données cible sont stockées dans une liste liée, un noeud de tête de la liste liée stocke l'identifiant de la période de sauvegarde actuelle, le i^{ème} noeud d'élément de la liste liée stocke des informations d'empreinte digitale d'un i^{ème} bloc de données cible des blocs de données cibles, k est une quantité totale de blocs de données cibles et est un nombre entier supérieur ou égal à 1, et i est un nombre entier supérieur à 0 et inférieur ou égal à k.

6. Dispositif de stockage selon la revendication 5, dans lequel les informations d'empreinte digitale du i^{ème} bloc de données cible est une empreinte digitale du i^{ème} bloc de données cible et le i^{ème} noeud d'élément de la liste liée stocke en outre une relation de mise en correspondance entre l'empreinte digitale du i^{ème} bloc de données cible et une adresse de stockage du i^{ème} bloc de données cible ; et
l'unité de traitement (41) est spécialement configurée :
pour obtenir le i^{ème} bloc de données cible en fonction de l'empreinte digitale du i^{ème} bloc de données cible et de la relation de mise en correspondance entre l'empreinte digitale du i^{eme} bloc de données cible et l'adresse de stockage du i^{ème} bloc de données cible.
